# EUROPÄISCHE PATENTSCHRIFT

(11) **EP 2 116 722 B1**
(45) Veröffentlichungstag und Bekanntmachung des Hinweises auf die Patenterteilung: **20.03.2013**
(21) Anmeldenummer: 09005872.8
(22) Anmeldetag: 28.04.2009
(51) Int. Cl.: F03D 11/00, F01D 25/36, F03D 11/02

(54) **Positionierung eines Rotors einer Windenergieanlage**
Positioning of the rotor of a wind energy device
Positionnement du rotor d'une éolienne

(30) Priorität: 06.05.2008 DE 102008022383
(43) Veröffentlichungstag der Anmeldung: 11.11.2009
(73) Patentinhaber: REpower Systems SE, 22297 Hamburg (DE)
(72) Erfinder: Trede, Alf, 25885 Immenstedt (DE)
(74) Vertreter: Seemann, Ralph

(56) Entgegenhaltungen:
- EP-A1- 1 659 286
- EP-A2- 1 167 754
- EP-A2- 1 895 158
- WO-A1-2005/090780
- WO-A1-2007/033671
- DE-A1- 10 334 448
- GB-A- 2 429 342

## Beschreibung

Die Erfindung betrifft eine Windenergieanlage mit einem Rotor, der über eine Rotorwelle mit einem Getriebe in Wirkverbindung ist, wobei insbesondere das Getriebe über einen Hauptantrieb mit einem Generator in Wirkverbindung ist. Darüber hinaus betrifft die Erfindung ein Verfahren zum Betrieb einer einen Rotor aufweisenden Windenergieanlage sowie eine Verwendung eines Antriebsorgans.

Bei Windenergieanlagen sind die Rotoren der Windenergieanlage über einen Triebstrang mit dem Getriebe und dem Generator verbunden. Hierbei weist die Windenergieanlage in der Regel eine Rotorwelle auf, an deren einem Ende die Rotorwelle mit dem Rotor und an ihrem anderen Ende mit dem Getriebe gekoppelt ist. Die Rotorblätter der Windenergieanlage sind an einer Rotornabe befestigt, die ihrerseits wiederum mit der Rotorwelle verbunden ist. Die Drehbewegung des Rotors wird über die Rotorwelle auf das Getriebe übertragen, so dass das Getriebe über einen generatorseitigen Abtrieb mit einem Generator in Wirkverbindung ist.

Bei gattungsgemäßen Windenergieanlagen kann das Getriebe einstufig oder auch mehrstufig ausgebildet sein, wobei das Getriebe in der Regel eine Planetenstufe aufweist.

Beispielsweise ist in DE-B-103 57 026 eine Windenergieanlage mit einem Rotor beschrieben, der über eine hohle Rotorwelle mit einem Getriebe gekoppelt ist, das in Antriebsverbindung mit einem Generator steht.

Darüber hinaus sind Rotordrehvorrichtungen für Rotoren von Windenergieanlagen bekannt, die eingesetzt werden, um Triebstränge der Windenergieanlagen mit langsamer Drehzahl zu drehen.

Beispielsweise ist aus DE-C-100 31 473 eine Vorrichtung zum Drehen einer mit einem Rotor verbundenen oder gekoppelten Welle einer Windenergieanlage bekannt, wobei zur Erzeugung der Drehbewegung des Rotors ein handbetriebenes Werkzeug oder ein motorisch angetriebenes Werkzeug, z.B. eine Bohrmaschine, vorgesehen ist.

Darüber hinaus ist aus EP-A-1 659 286 eine so genannte Turn-Vorrichtung zum Drehen eines Antriebsstrangs einer Windenergieanlage bekannt.

Außerdem ist aus DE-B-103 34 448 eine Windenergieanlage mit einem Rotor zum Antrieb eines Generators bekannt, wobei ein weiterer Antrieb als Drehvorrichtung vorgesehen ist. Die Drehvorrichtung ist unter Last an Antriebselemente der Windenergieanlage an- und abkoppelbar.

Ausgehend von diesem Stand der Technik besteht die Aufgabe der vorliegenden Erfindung darin, während der Wartungsphase einer Windenergieanlage auf einfache Weise eine Drehung und Positionierung eines Rotors zu ermöglichen, wobei der konstruktive Aufbau möglichst gering gehalten werden soll.

Gelöst wird die Aufgabe durch eine Windenergieanlage mit einem Rotor, der über eine Rotorwelle mit einem Getriebe in Wirkverbindung ist, wobei insbesondere das Getriebe über einen Hauptantrieb mit einem Generator in Wirkverbindung ist, wobei das Getriebe einen Nebenantrieb aufweist, die dadurch weitergebildet wird, dass eine Rotorpositionierungsdreheinrichtung am Nebenantrieb anordbar oder angeordnet ist, so dass unter Verwendung der Rotorpositionierungsdreheinrichtung und des Nebenantriebs des Getriebes der Rotor der Windenergieanlage positionierbar ist oder positioniert wird oder ist, wobei der Nebenantrieb nicht innerhalb bzw. außerhalb des Getriebes schaltbar ist.

Die Erfindung beruht auf dem Gedanken, bei einem am Getriebe einer Windenergieanlage vorhandenen Nebenantrieb eine Antriebseinrichtung anzuordnen bzw. eine bereits am Nebenantrieb des Getriebes vorgesehene Antriebseinrichtung als Rotorpositionierungsdreheinrichtung bzw. Rotordrehvorrichtung während einer Wartungsphase zu nutzen bzw. zu verwenden, so dass durch die Aktivierung der Antriebseinrichtung ein Rotor während des Stillstands der Windenergieanlage zu Wartungszwecken in eine vorgegebene Wartungsposition gedreht wird, um nach entsprechender Positionierung ggf. den Rotor zu arretieren. Dabei befindet sich die Dreheinrichtung im Eingriff bzw. in Wirkverbindung mit dem Nebenantrieb, so dass durch die am Nebenantrieb angreifende Rotorpositionierungsdreheinrichtung im Wartungszustand der Windenergieanlage ein Drehmoment über das Getriebe und die Rotorwelle auf den Rotor übertragen wird, so dass der Rotor in eine vorbestimmte Position gedreht wird. Hierdurch wird ein Einstieg in die Rotornabe sowie eine Inspektion von Rotorblättern ermöglicht, wobei in der Wartungsposition der Windenergieanlage ein Rotorblatt horizontal ausgerichtet ist. Insbesondere werden als Rotordrehvorrichtung bzw. als Rotorpositionierungsdreheinrichtung bereits am Nebenantrieb vorgesehene bzw. vorhandene Antriebseinrichtungen hierzu verwendet bzw. eingesetzt, wodurch entsprechende Umbaumaßnahmen am Nebenantrieb des Getriebes nicht notwendig sind.

Während der Stillstandsphase des Rotors bzw. der Windenergieanlage zu Wartungszwecken, in der keine Energie erzeugt wird, wird bei Aktivierung des Nebenantriebs durch die Rotorpositionierungsdreheinrichtung über das Getriebe und die Rotorwelle auf die Rotornabe mit den Rotorblättern ein Drehmoment übertragen, so dass der Rotor in eine entsprechende Wartungsposition gedreht wird. Somit wird eine Rotordrehvorrichtung für Rotoren von Windenergieanlagen bereitgestellt, wobei zur Positionierung und Drehung des Rotors der Triebstrang mit langsamer Drehzahl gedreht wird.

Es ist bekannt, dass die im Stand der Technik üblichen Schaltvorrichtungen im Nebenantrieb innerhalb des Getriebes wartungsintensiv und störanfällig sind und somit insbesondere für Offshore-Windenergieanlagen ungeeignet sind. Da der Nebenantrieb somit über die gesamte Lebensdauer der Windenergieanlage angetrieben wird, ist er für ebenso viele Betriebsstunden auszulegen wie der Hauptantrieb. Um nicht die gesamte Rotordrehvorrichtung kostenintensiv für die gesamte Lebensdauer auslegen zu müssen, sind die in den Unteransprüchen beschriebenen Varianten vorgesehen, die Antriebseinrichtungen nur für einen Wartungseinsatz vorzusehen oder alternativ eine Schalteinrichtung außerhalb des Getriebes vorzusehen.

Dazu ist weiter vorgesehen, dass ein, insbesondere getriebeexterner, Antrieb für die Rotorpositionierungsdreheinrichtung vorgesehen ist. Dieser Antrieb kann beispielsweise temporär, d.h. für einen bestimmten Zeitraum, während der Wartungsphase an dem Nebenantrieb angeordnet werden, um über den Nebenantrieb das Getriebe sowie den gesamten Triebstrang in Rotation zu versetzen. Beispielsweise ist der Antrieb in Form eines Kraftschraubers oder dergleichen ausgebildet, so dass dieser Kraftschrauber vom Wartungspersonal als Werkzeug mitgeführt wird und zu Wartungszwecken des Rotors mit dem Nebenantrieb gekoppelt wird. Dieser Kraftschrauber ist beispielsweise als elektrisch betriebener Drehmomentschrauber ausgebildet.

In einer weiteren Ausgestaltung ist außerdem vorgesehen, dass der Antrieb mittels einer Kraftübertragungseinrichtung an den anzutreibenden Teil der Rotorpositionierungsdreheinrichtung gekoppelt ist oder wird, wodurch ein temporär ausgebildeter Turn-Antrieb bzw. Verstellantrieb für den Rotor während der Ausführung der Wartungsarbeiten ausgebildet wird.

Insbesondere sind oder werden der Antrieb und der vom Antrieb anzutreibende bzw. angetriebene Teil der Rotorpositionierungsdreheinrichtung über wenigstens einen Adapter miteinander gekoppelt oder verbunden, so dass beispielsweise der Antrieb der Rotorpositionierungsdreheinrichtung beispielsweise an den anzutreibenden Teil zur Rotorpositionierung temporär lösbar angeordnet wird. Nach Durchführung der Wartungsarbeiten werden der Antrieb bzw. der Antriebsmotor für die Rotorpositionierungsdreheinrichtung demontiert bzw. die Verbindung gelöst, so dass der Antrieb, beispielsweise in Form eines Drehmomentschraubers oder dergleichen an einer weiteren Windenergieanlage bzw. an einem anderen Getriebe einer Windenergieanlage lösbar bzw. einem anzutreibenden Teil einer anderen Drehvorrichtung angeflanscht werden kann. Dadurch ergibt sich eine einfache Handhabung eines derartigen Drehmomentschraubers.

Weiterhin ergibt sich eine einfache Handhabung dadurch, dass der Adapter eine Überlastbegrenzungseinrichtung, insbesondere eine Überlastkupplung, aufweist, so dass das Drehmoment eines Kraftschraubers oder eines Drehmomentschraubers durch Einstellung eines vorbestimmten Drehmoments erreicht wird. Bei Überschreiten des aufgebrachten Drehmoments wird eine mechanische Trennung zwischen dem Antrieb und dem angetriebenen Teil der Rotorpositionierungseinrichtung erreicht. Dies kann z.B. dann eintreten, wenn plötzliche starke Windböen der vorgesehenen Rotorpositionierung entgegenwirken.

Vorteilhafterweise weist die Rotorpositionierungsdreheinrichtung eine ein Fördermedium fördernde Fördereinrichtung, insbesondere Ölpumpe, als anzutreibenden Teil auf, wodurch unter Verwendung der am Triebstrang bzw. am Getriebe ausgebildeten und angetriebenen Getriebeölpumpe, die das Getriebe mit Öl während der Energieerzeugungsphase versorgt, während der Wartungsphase ein Drehmoment über den Nebenantrieb auf die Rotorwelle und den Rotor übertragen, wodurch der Rotor in eine Wartungsposition langsam gedreht wird. Hierdurch wird unter Verwendung bestehender Getriebeölfördereinrichtungen, die einen direkten Eingriff des Nebenantriebs in eine Getriebestufe aufweisen, erreicht, dass durch die angetriebene Pumpe entsprechende Drehmomente auf das Getriebe bzw. die Rotorwelle und dem daran angeordneten Rotor übertragen werden.

In einer weiteren Ausgestaltung ist der Antrieb als hydraulischer oder elektrischer Motor ausgebildet, so dass beispielsweise ein Drehmomentschrauber bzw. Kraftschrauber mit einer Getriebeölpumpe bzw. einer Ölpumpe des Getriebes gekoppelt wird und somit über die Pumpe und den Nebenantrieb der Rotor in eine Wartungsposition gedreht wird.

Darüber hinaus ist in einer vorteilhaften Ausführungsform vorgesehen, dass eine Drehmomentstützeinrichtung für den Antrieb vorgesehen ist, wobei insbesondere mittels der Drehmomentstützeinrichtung der Antrieb am Getriebe und/oder einem, insbesondere feststehenden, Bauteil abgestützt ist oder wird.

Außerdem zeichnet sich die Windenergieanlage dadurch aus, dass der Antrieb mit einer Steuereinrichtung der Windenergieanlage, insbesondere einer Turbinensteuereinrichtung, verbunden ist oder wird, so dass durch die Einbindung des Antriebs in das Betriebsführungssystem der Windenergieanlage eine exakte Position des Rotors in der Wartungsposition erreicht wird und außerdem dadurch Fehlbedienungen vermieden werden. Hierzu kann beispielsweise ein Stecker an der so genannten Top-Box zur Versorgung des Antriebs vorgesehen sein.

Überdies ist es vorteilhaft, dass zur Durchführung von Wartungsarbeiten der Rotor mittels einer Arretiereinrichtung, insbesondere nach ausgeführter Positionierung des Rotors, arretiert ist oder wird.

Darüber hinaus wird die Aufgabe gelöst durch ein Verfahren zum Betrieb einer einen Rotor aufweisenden Windenergieanlage, wobei während einer Wartungsphase, d.h. während eines Stillstands der Windenergieanlage, der in Wirkverbindung mit einem Getriebe stehende oder gekoppelte Rotor unter Verwendung eines Nebenantriebs des Getriebes mittels einer mit dem Nebenantrieb gekoppelten Rotorpositionierungsdreheinrichtung positioniert wird, wobei der Nebenantrieb nicht innerhalb bzw. außerhalb des Getriebes geschaltet wird. Im Rahmen der Erfindung wird unter einem Nebenantrieb ein Antrieb eines Getriebes verstanden, der neben bzw. zusätzlich zu dem bereits vorhandenen Hauptantrieb zwischen dem Getriebe und dem Generator ausgebildet ist. Durch den Hauptantrieb wird der Kraftfluss zwischen dem Rotor und dem Generator ausgebildet. Durch den Nebenantrieb wird somit eine Verzweigung des Kraftflusses innerhalb des Getriebegehäuses erreicht.

Weiterhin wird der Rotor nach einer Drehung mittels der Rotorpositionierungsdreheinrichtung in einer vorbestimmten Wartungsposition positioniert und/oder arretiert.

Außerdem wird bevorzugterweise der anzutreibende Teil der die Rotorpositionierungsdreheinrichtung mittels eines, insbesondere getriebeexternen, vorzugsweise eines hydraulischen oder elektrischen, Antriebs angetrieben, wobei in einer Ausgestaltung der Antrieb als mobiler Antrieb temporär an dem Nebenantrieb des Getriebes zur Durchführung der Wartungsarbeiten bzw. zur Durchführung der Drehung des Rotors in eine vorbestimmte Wartungsposition angebracht wird.

Dazu ist weiter vorgesehen, dass der Antrieb für eine vorbestimmte Zeitdauer, insbesondere während der Wartungsphase, an den anzutreibenden Teil der Rotorpositionierungsdreheinrichtung, vorzugsweise mittels einer Kraftübertragungseinrichtung, angekoppelt wird. Hierbei ist in einer Ausgestaltung die Kraftübertragungseinrichtung als Adapter ausgebildet, so dass der Antrieb lösbar am anzutreibenden Teil der Rotorpositionierungsdreheinrichtung angeordnet wird.

Alternativ ist vorgesehen, eine Schalteinrichtung außerhalb des Getriebes anzuordnen, mit der der antreibende Teil der Rotordrehvorrichtung vom Nebenantrieb getrennt werden kann. In diesem Fall sieht eine bevorzugte Ausführungsform vor, dass der antreibende Teil permanent am Getriebe verbleiben kann. Dadurch, dass der Antrieb außerhalb des Getriebes auskoppelbar ist, unterliegt er jedoch nicht dem Verschleiß über die gesamte Lebensdauer der Windenergieanlage.

Bevorzugterweise wird außerdem der Antrieb der Rotorpositionierungsdreheinrichtung drehmomentgestützt beispielsweise am Nebenantrieb oder am Gehäuse des Getriebes gehalten oder montiert.

Eine einfache Handhabung wird ferner dadurch erreicht, dass der Antrieb mittels einer Steuereinrichtung der Windenergieanlage gesteuert wird, so dass die Steuerung des Antriebs, beispielsweise über das Betriebsführungssystem oder eine andere Steuereinrichtung erreicht wird, wodurch eine Fehlfunktion bzw. Fehlbedienung der Rotorpositionierungsdreheinrichtung vermieden wird.

Darüber hinaus wird die Aufgabe gelöst durch die Verwendung eines Antriebsorgans als Rotorpositionierungsdreheinrichtung in einer voranstehend beschrieben Windenergieanlage, wobei das Antriebsorgan an einem Nebenantrieb des Getriebes angreift.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Draufsicht auf einen Triebstrang einer erfin- dungsgemäßen Windenergieanlage und
- Fig. 2: eine Detailansicht einer erfindungsgemäßen Rotorpositionierungsdreheinrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

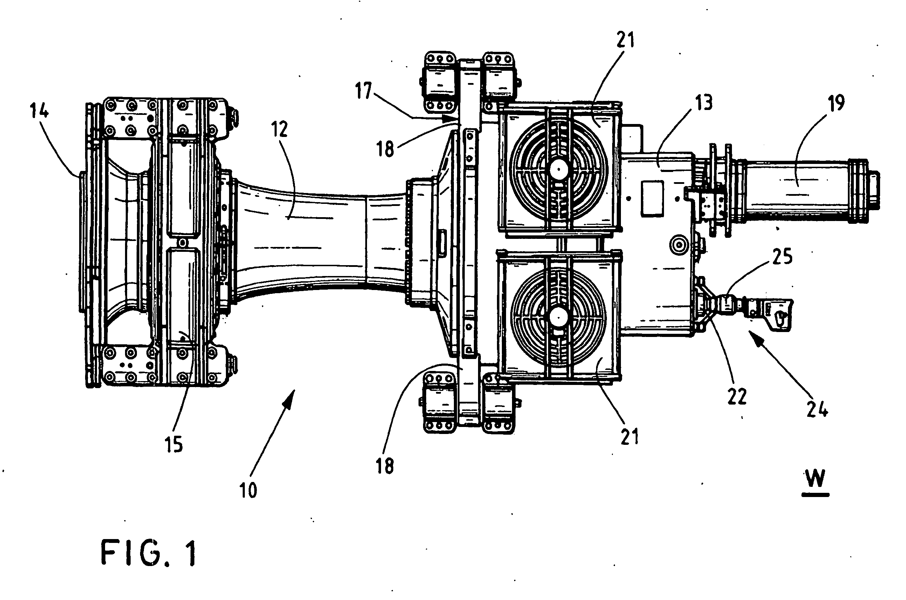

In Fig. 1 ist eine Draufsicht auf einen Triebstrang 10 einer schematisch bezeichneten Windenergieanlage W dargestellt. Der Triebstrang 10 besteht aus einem (hier nicht dargestellten) Rotor mit Rotorblättern, einer Rotorwelle 12 und einem Getriebe 13, insbesondere einem Planetengetriebe. Die Rotorwelle 12 ist über einen Rotorwellenflansch 14 mit dem Rotor verbunden. Der Triebstrang 10 ist über ein vorderes Wälzlager bzw. Hauptlager und ein hinteres getriebeseitiges (hier nicht dargestelltes) Wälzlager gelagert. Das vordere Hauptlager bzw. Wälzlager 15 ist beispielsweise als winkelbewegliches Festlager im Bereich der vorderen Rotorwelle 12 angeordnet. Das hintere Wälzlager ist im Getriebe 13 integriert.

Das Getriebe 13 ist im Bereich des hinteren Wälzlagers seitlich mittels beidseits des Generators angeordneter Drehmomentstützen 17 aufgehängt. Durch die Drehmomentstützen 17 wird das Getriebe 13 mit dem nicht dargestellten Maschinenträger der Windenergieanlage W gekoppelt.

Die Drehmomentenstützen 17 weisen seitlich am Getriebe 13 angeordnete Stützarme 18 auf, die mit dem nicht dargestellten Maschinenträger verbunden sind, wobei die Kopplung der Stützarme 18 beispielsweise mit Lagerböcken über eine elastische Aufhängung erfolgt.

Das Getriebe 13 ist rotorwellenseitig mit dem Rotor verbunden. Darüber hinaus ist das Getriebe 13 über eine Abtriebswelle 19 als Hauptantrieb mit einem (hier nicht dargestellten) Generator verbunden.

Auf der Oberseite des Getriebes 13 sind weiterhin zwei Ölkühleinrichtungen 21 angeordnet, um die Getrieberäder des Getriebes 13 zu schmieren, wobei in den Ölkühleinrichtungen 21 das umgepumpte Öl gekühlt wird.

Ferner ist auf der generatorseitigen Abtriebsseite des Getriebes 13 neben der Abtriebswelle 19 eine Getriebeölpumpe 22, mittels der das Öl im Getriebe 13 gefördert wird, vorgesehen. Hierbei ist beispielsweise die Getriebeölpumpe 22 als Zahnradpumpe ausgeführt, die als Förderpumpe zum Transport von Ölen oder schmierfähigen Flüssigkeiten eingesetzt werden.

Im Wartungszustand der Windenergieanlage W wird keine Energie erzeugt, so dass der Rotor der Windenergieanlage W nicht angetrieben wird. Das heißt, dass die Wartungsarbeiten bei keinem oder nur geringen Windströmungen oder bei vollständig aus dem Wind gedrehten Rotorblättern durchgeführt werden.

Während der Durchführung von Wartungsarbeiten wird an die Getriebeölpumpe 22 ein Antriebsmotor bzw. ein Drehmomentschrauber 25 an der Getriebeölpumpe 22 aufgesteckt, so dass unter Nutzung des Drehmomentschraubers 25 und der Getriebeölpumpe 22 über einen Nebenantrieb 30 im Getriebe das Stirnrad der letzten Getriebestufe der Windenergieanlage angetrieben wird. Die Abtriebswelle 19 wird während der Erzeugung von Energie über einen Hauptantrieb angetrieben. Durch den Hauptantrieb während der Energieerbesteht ein Kraftfluss zwischen dem Rotor und dem Generator. Bei der Rotorpositionierung drehen die Abtriebswelle 19 sowie der Generator mit.

Durch die Kombination des Drehmomentschraubers 25 als Antrieb und der Getriebeölpumpe 25 als angetriebener Teil während der Wartungsphase wird eine Rotorpositionierungsdreheinrichtung 24 ausgebildet, so dass durch Aktivierung der Rotorpositionierungsdrehvorrichtung 24 über die Einleitung von Drehmomenten über das Nebengetriebe über die Rotorwelle 12 ein Drehmoment auf die Rotorwelle 12 ausgeübt wird, so dass der Rotor der Windenergieanlage W in eine entsprechende Wartungsposition gedreht wird.

Eine alternative Ausführungsform sieht dabei vor, dass die Getriebeölpumpe vorteilhaft durch Umkehrung der Druckverhältnisse direkt als hydraulischer Antriebsmotor genutzt wird. In diesem Fall wird nur ein Hydraulikaggregat als Antriebseinheit zu Wartungszwecken an der Rotordrehvorrichtung montiert, welches Drucköl bereitstellt, um damit die Ölpumpe im Nebenantrieb des Getriebes als hydraulischen Antriebsmotor zu betreiben.

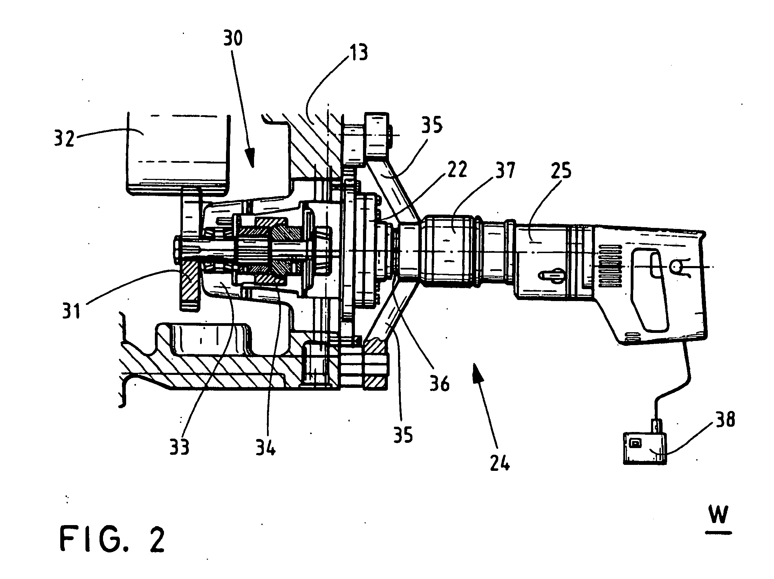

Fig. 2 zeigt eine Detailansicht der Rotorpositionierungsdreheinrichtung 24 in einer Detailansicht.

Das Getriebe 13 verfügt über einen Nebenantrieb 30, wobei ein Antriebsritzel 31 des Nebenantriebs 30 mit einem Stirnrad 32 des Hauptgetriebes, bevorzugt mit dem Stirnrad der Abtriebstufe, kämmt. Über einen topfartigen Einsatz 33 ist das Antriebsritzel 31 in dem Gehäuse des Getriebes 13 gelagert. Ferner ist das Antriebsritzel 31 über eine so genannte Bogenzahnkupplung 34 mit der Getriebeölpumpe 22 in Form einer Zahnradpumpe verbunden bzw. gekoppelt.

Die Getriebeölpumpe 22 fördert während der Energieerzeugungsphase oder im Trudelbetrieb bei einer geringen Rotordrehzahl Schmieröl und ist so verschaltet, dass die Förderrichtung der Getriebeölpumpe 22 unabhängig von der Drehrichtung des Rotors ist, um auch bei einem Rückwärtstrudeln des Rotors eine Schmierung des Getriebes sicherzustellen. Antriebsseitig ist die Getriebeölpumpe 22 mittels der Bogenzahnkupplung 34 mit dem Nebenantrieb 30 gekoppelt.

Ferner weist die Getriebeölpumpe 22 ein freies Wellenende auf, wobei eine bzw. die Nabe der Getriebeölpumpe 22 bzw. Zahnradpumpe verlängert ist. Auf das freie Wellenende wird über eine Steckverzahnung 36 ein Adapter 37 mit einem Zwischengetriebe aufgesteckt. Das Zwischengetriebe weist ferner eine Überlastkupplung auf.

In den Adapter 37 wird ein Drehmomentschrauber 25 eingesteckt, so dass bei Durchführung von Wartungsarbeiten durch Aktivierung des Drehmomentschraubers 25 (als Antrieb) und der angetriebenen Getriebeölpumpe 22 sowie über das in das Stirnrad eingreifende Antriebsritzel 31 ein Drehmoment auf die Rotorwelle und den Rotor übertragen wird, so dass der Rotor in eine Wartungsposition gedreht wird.

Am Adapter 37 sind ferner seitlich mehrere Stützarme 35 angeordnet, die in einer lösbaren Verbindung auf der Rückseite des Getriebes 13 angeordnet werden. Durch die Stützarme 35 wird der Drehmomentschrauber 25 drehmomentgestützt bzw. -gesichert am Nebenantrieb 30 gehalten.

Die Energieversorgung des Drehmomentschraubers 25 erfolgt über eine Steuereinrichtung 38 der Windenergieanlage W, wobei der Drehmomentschrauber 25 in einem, beispielsweise in der Gondel der Windenergieanlage, vorgesehenen Stecker eingesteckt wird. Die Steuereinrichtung 38 schaltet die Energieversorgung der Rotorpositionierungsdreheinrichtung 24 frei, wenn sich die Windenergieanlage W in dem hierzu vorgesehenen Wartungszustand befindet. Beispielsweise kann hierbei überprüft werden, ob sich die Windgeschwindigkeit und die Windrichtung in den zulässigen Bereichen befindet und/oder, dass das elektrische Netz vorhanden ist und/oder, dass alle Rotorblattwinkel der Rotorblätter in zulässigen Bereich (z.B. Fahnenposition oder auch in einer 0°-Betriebsposition) sind. Darüber hinaus kann auch überprüft werden, ob die Windnachführung der Gondel funktionsfähig ist, sowie ob ein Serviceschalter eingelegt ist und/oder, ob der Rotor nicht verriegelt oder festgebremst ist. Ebenso kann überprüft werden, ob die Rotorpositionierungsdreheinrichtung ordnungsgemäß montiert bzw. verschaltet ist.

In einer Ausgestaltung ist im Normalbetrieb bzw. bei Energieerzeugung der Drehmomentschrauber 25 von der Getriebeölpumpe 22 entfernt bzw. demontiert, so dass die als freies Wellenende ausgebildete Steckverzahnung 36 mit einem auf bzw. über die Getriebeölpumpe 22 aufgesteckten Deckel geschützt wird. In einer bevorzugten Ausführungsform kann dabei vorgesehen sein, dass der Deckel mit einem Sensor versehen ist, der bei Entfernung des Deckels die Bremssysteme der Windenergieanlage aktiviert bzw. einfallen lässt, um die Verletzungsgefahr für das Wartungspersonal am rotierenden Wellenende herabzusetzen.

Die festgesetzte Bremse, durch die der Rotor in der Wartungsposition arretiert gehalten wird, lässt sich erst dann öffnen, wenn die Rotorpositionierungsdreheinrichtung 24 durch Aufsetzen des Drehmomentschraubers 25 ordnungsgemäß montiert ist und die Windenergieanlage W sich in einem für die Rotorpositionierungen zulässigen Zustand befindet. Erst nach manuellem Öffnen der Rotorbremse wird dann die Energieversorgung für die Rotorpositionierungsdreheinrichtung 24 freigeschaltet.

### Bezugszeichenliste

- 10: Triebstrang
- 12: Rotorwelle
- 13: Getriebe
- 14: Rotorwellenflansch
- 15: Wälzlager
- 17: Drehmomentstütze
- 18: Stützarm
- 19: Abtriebswelle
- 21: Kühleinrichtung
- 22: Getriebeölpumpe
- 24: Rotorpositionierungsdreheinrichtung
- 25: Drehmomentschrauber
- 30: Nebenantrieb
- 31: Antriebsritzel
- 32: Stirnrad
- 33: topfförmiger Einsatz
- 34: Bogenzahnkupplung
- 35: Stützarm
- 36: Steckverzahnung
- 37: Adapter
- 38: Steuereinrichtung

- W: Windenergieanlage

## Patentansprüche

1. Windenergieanlage (W) mit einem Rotor, der über eine Rotorwelle (12) mit einem Getriebe (13) in Wirkverbindung ist, wobei insbesondere das Getriebe (13) über einen Hauptantrieb (19) mit einem Generator in Wirkverbindung ist, und das Getriebe (13) einen Nebenantrieb (30) aufweist, wobei der Nebenantrieb (30) nicht innerhalb des Getriebes (13) schaltbar ist, **dadurch gekennzeichnet, dass** eine Rotorpositionierungsdreheinrichtung (24) am Nebenantrieb (30) anordbar ist, so dass unter Verwendung der Rotorpositionierungsdreheinrichtung (24) und des Nebenantriebs (30) des Getriebes (13) der Rotor der Windenergieanlage (W) positionierbar ist.

2. Windenergieanlage (W) nach Anspruch 1, **dadurch gekennzeichnet, dass** ein, insbesondere getriebeexterner, Antrieb (25) für die Rotorpositionierungsdreheinrichtung (24) vorgesehen ist.

3. Windenergieanlage (W) nach Anspruch 2, **dadurch gekennzeichnet, dass** der Antrieb (24) mittels einer Kraftübertragungseinrichtung (36) an den anzutreibenden Teil der Rotorpositionierungsdreheinrichtung (24) gekoppelt ist.

4. Windenergieanlage (W) nach Anspruch 2 oder 3, **dadurch gekennzeichnet, dass** der Antrieb (25) und der anzutreibende Teil der Rotorpositionierungsdreheinrichtung (24) über wenigstens einen Adapter (37) miteinander gekoppelt oder verbunden sind, wobei insbesondere der Adapter (37) eine Überlastbegrenzungseinrichtung, insbesondere eine Überlastkupplung, aufweist.

5. Windenergieanlage (W) nach einem der Ansprüche 1 bis 4, **dadurch gekennzeichnet, dass** die Rotorpositionierungsdreheinrichtung (24) eine ein Fördermedium fördernde Fördereinrichtung, insbesondere Ölpumpe (22), aufweist.

6. Windenergieanlage (W) nach einem der Ansprüche 2 bis 5, **dadurch gekennzeichnet, dass** der Antrieb (25) als hydraulischer oder elektrischer Motor ausgebildet ist.

7. Windenergieanlage (W) nach einem der Ansprüche 2 bis 6, **dadurch gekennzeichnet, dass** eine Drehmomentstützeinrichtung für den Antrieb vorgesehen ist, wobei insbesondere mittels der Drehmomentstützeinrichtung der Antrieb (25) am Getriebe (13) und/oder einem, insbesondere feststehenden, Bauteil abgestützt ist.

8. Windenergieanlage (W) nach einem der Ansprüche 2 bis 7, **dadurch gekennzeichnet, dass** der Antrieb (25) mit einer Steuereinrichtung (38) der Windenergieanlage (W), insbesondere einer Turbinensteuereinrichtung, verbunden ist.

9. Windenergieanlage (W) nach einem der Ansprüche 1 bis 8, **dadurch gekennzeichnet, dass** der Rotor mittels einer Arretiereinrichtung, insbesondere nach ausgeführter Positionierung des Rotors, arretiert ist.

10. Verfahren zum Betrieb einer einen Rotor aufweisenden Windenergieanlage (W), wobei während einer Wartungsphase der Windenergieanlage (W) der in Wirkverbindung mit einem Getriebe (13) stehende oder gekoppelte Rotor unter Verwendung eines Nebenantriebs (30) des Getriebes (13) mittels einer mit dem Nebenantrieb (30) gekoppelten Rotorpositionierungsdreheinrichtung (24) positioniert wird, wobei der Nebenantrieb (30) nicht innerhalb des Getriebes (13) geschaltet wird.

11. Verfahren nach Anspruch 10, **dadurch gekennzeichnet, dass** der Rotor nach einer Drehung mittels der Rotorpositionierungsdreheinrichtung (24) in einer vorbestimmten Wartungsposition positioniert wird und/oder arretiert wird.

12. Verfahren nach Anspruch 10 oder 11, **dadurch gekennzeichnet, dass** der anzutreibende Teil der Rotorpositionierungsdreheinrichtung (24) mittels eines, insbesondere getriebeexternen, vorzugsweise eines hydraulischen oder elektrischen, Antriebs (25) angetrieben wird, wobei insbesondere der Antrieb (25) für eine vorbestimmte Zeitdauer, insbesondere während der Wartungsphase, an die Rotorpositionierungsdreheinrichtung (24), vorzugsweise mittels einer Kraftübertragungseinrichtung (36), angekoppelt wird.

13. Verfahren nach Anspruch 12, **dadurch gekennzeichnet, dass** der Antrieb (25) für die Rotorpositionierungsdreheinrichtung (24) drehmomentgestützt gehalten oder montiert wird.

14. Verfahren nach Anspruch 12 bis 13, **dadurch gekennzeichnet, dass** der Antrieb (25) mittels einer Steuereinrichtung (38) der Windenergieanlage (W) gesteuert wird.

15. Verwendung eines Antriebsorgans als Rotorpositionierungsdreheinrichtung (24) in einer Windenergieanlage (W) nach einem der Ansprüche 1 bis 9.

## Claims

1. A wind turbine generator system (W) with a rotor, which is operatively connected by means of a rotor shaft (12) to a gearbox (13), whereby, in particular, the gearbox (13) is operatively connected by means of a main drive (19) to a generator and the gearbox (13) includes an auxiliary drive (30), wherein the auxiliary drive (30) is not connectable within the gearbox (13), **characterised in that** a rotor positioning rotary device (24) is arrangable on the auxiliary drive (30) so that the rotor of the wind turbine generator system (W) may be positioned with the use of the rotor positioning rotary device (24) and the auxiliary drive (30) of the gearbox (13).

2. A wind turbine generator system (W) as claimed in in claim 1, **characterised in that** an actuator (25) particularly external of the gearbox, for the rotor positioning rotary device (24) is provided.

3. A wind turbine generator system (W) as claimed in claim 2, **characterised in that** the actuator (24) is coupled by means of a force transmission device (36) to the component to be driven of the rotor positioning rotary device (24).

4. A wind turbine generator system (W) as claimed in claim 2 or 3, **characterised in that** the actuator (25) and the component to be driven of the rotor positioning rotary device (24) are coupled or connected together by means of at least one adapter (37), wherein, in particular, the adapter (37) includes an overload limiting device, particularly an overload clutch.

5. A wind turbine generator system (W) as claimed in one of claims 1 to 4, **characterised in that** the rotary positioning rotary device (24) includes a conveying device conveying a medium to be conveyed, particularly an oil pump (22).

6. A wind turbine generator system (W) as claimed in one of claims 2 to 5, **characterised in that** the actuator (25) is constructed in the form of a hydraulic or electric motor.

7. A wind turbine generator system (W) as claimed in one of claims 2 to 6, **characterised in that** a torque reaction device is provided for the actuator, wherein, in particular, the actuator (25), is supported on the gearbox (13) and/or a, in particular, fixed component by means of the torque reaction device.

8. A wind turbine generator system (W) as claimed in one claims 2 to 7, **characterised in that** the actuator (25) is connected to a control device (38) of the wind turbine generator system (W), particularly a turbine control device.

9. A wind turbine generator system (W) as claimed in one of claims 1 to 8, **characterised in that** the rotor is locked by means of a locking device, particularly after having positioned the rotor.

10. A method of operating a wind turbine generator system (W) including a rotor, wherein during a maintenance phase of the wind turbine generator system (W), the rotor which is or is coupled in operative connection with a gearbox (13) is positioned by using an auxiliary drive (30) of the gearbox (13) by means of a rotor positioning rotary device (24) coupled to the auxiliary drive (30), wherein the auxiliary drive (30) is not connected within the gearbox (13).

11. A method as claimed in claim 10, **characterised in that** after rotation by means of the rotor positioning rotary device (24), the rotor is positioned and/or locked in a predetermined maintenance position.

12. A method as claimed in claim 10 or 11, **characterised in that** the component of the rotor positioning rotary device (24) to be rotated is driven by means of a preferably hydraulic or electric actuator (25), which is, in particular, external to the gearbox, wherein, in particular, the actuator (25) is coupled for a predetermined period of time, particularly during the maintenance phase, to the rotor positioning rotary device (24), preferably by means of a force transmission device (36).

13. A method as claimed in claim 12, **characterised in that** the actuator (25) for the rotor positioning rotary device (24) is held or mounted in a torque braced manner.

14. A manner as claimed in claims 12 to 13, **characterised in that** the actuator (25) is controlled by means of a control device (38) of the wind turbine generator system (W).

15. Use of a drive element as a rotor positioning rotary device (24) in a wind turbine generator system (W) as claimed in one claims 1 to 9.

## Revendications

1. Éolienne (W) comprenant un rotor qui est en relation fonctionnelle avec une transmission (13) par le biais d'un arbre de rotor (12), dans laquelle la transmission (13) est en particulier en relation fonctionnelle avec un générateur par le biais d'un entraînement principal (19) et la transmission (13) comprend une prise de mouvement (30), la prise de mouvement (30) n'étant pas commutable à l'intérieur de la transmission (13), **caractérisée en ce qu'**un dispositif rotatif de positionnement du rotor (24) peut être agencé sur la prise de mouvement (30) de telle sorte que le rotor de l'éolienne (W) peut être positionné en utilisant le dispositif rotatif de positionnement du rotor (24) et la prise de mouvement (30) de la transmission (13).

2. Éolienne (W) selon la revendication 1, **caractérisée en ce qu'**un entraînement (25), en particulier extérieur à la transmission, est prévu pour le dispositif rotatif de positionnement du rotor (24).

3. Éolienne (W) selon la revendication 2, **caractérisée en ce que** l'entraînement (24) est couplé à la partie à entraîner du dispositif rotatif de positionnement du rotor (24) au moyen d'un dispositif de transmission du mouvement (36).

4. Éolienne (W) selon la revendication 2 ou la revendication 3, **caractérisée en ce que** l'entraînement (25) et la partie à entraîner du dispositif rotatif de positionnement du rotor (24) sont couplés ou reliés l'un avec l'autre par le biais d'au moins un adaptateur (37), étant entendu en particulier que l'adaptateur (37) comprend un dispositif de limitation contre la surcharge, en particulier un coupleur de surcharge.

5. Éolienne (W) selon l'une quelconque des revendications 1 à 4, **caractérisée en ce que** le dispositif rotatif de positionnement du rotor (24) comprend un dispositif de transport transportant une substance transportée, en particulier une pompe à huile (22).

6. Éolienne (W) selon l'une quelconque des revendications 2 à 5, **caractérisée en ce que** l'entraînement (25) est réalisé en tant que moteur hydraulique ou électrique.

7. Éolienne (W) selon l'une quelconque des revendications 2 à 6, **caractérisée en ce qu'**un dispositif de bras transversal est prévu pour l'entraînement, étant entendu en particulier que l'entraînement (25) prend appui sur la transmission (13) et/ou un composant, en particulier fixe, au moyen du dispositif de bras transversal.

8. Éolienne (W) selon l'une quelconque des revendications 2 à 7, **caractérisée en ce que** l'entraînement (25) est relié à un dispositif de commande (38) de l'éolienne (W), en particulier un dispositif de commande de turbine.

9. Éolienne (W) selon l'une quelconque des revendications 1 à 8, **caractérisée en ce que** le rotor est arrêté au moyen d'un dispositif d'arrêt, en particulier après la réalisation du positionnement du rotor.

10. Procédé d'exploitation d'une éolienne (W) comprenant un rotor, dans lequel pendant une phase de maintenance de l'éolienne (W), le rotor couplé ou en relation fonctionnelle avec une transmission (13) est positionné en utilisant une prise de mouvement (30) de la transmission (13) au moyen d'un dispositif rotatif de positionnement du rotor (24) couplé avec la prise de mouvement (30), étant entendu que la prise de mouvement (30) n'est pas commutée à l'intérieur de la transmission (13).

11. Procédé selon la revendication 10, **caractérisé en ce que** le rotor est positionné et/ou arrêté dans une position de maintenance prédéterminée après une rotation au moyen du dispositif rotatif de positionnement du rotor (24).

12. Procédé selon la revendication 10 ou la revendication 11, **caractérisé en ce que** la partie à entraîner du dispositif rotatif de positionnement du rotor (24) est entraînée au moyen d'un entraînement (25), de préférence hydraulique ou électrique, en particulier extérieur à la transmission, étant entendu en particulier que l'entraînement (25) est couplé avec le dispositif rotatif de positionnement du rotor (24), de préférence au moyen d'un dispositif de transmission du mouvement (36), pendant une période prédéterminée, en particulier pendant la phase de maintenance.

13. Procédé selon la revendication 12, **caractérisé en ce que** l'entraînement (25) est maintenu ou monté avec un bras transversal pour le dispositif rotatif de positionnement du rotor (24).

14. Procédé selon la revendication 12 ou la revendication 13, **caractérisé en ce que** l'entraînement (25) est commandé au moyen d'un dispositif de commande (38) de l'éolienne (W).

15. Utilisation d'un organe d'entraînement en tant que dispositif rotatif de positionnement du rotor (24) dans une éolienne (W) selon l'une quelconque des revendications 1 à 9.
